(19) **Europäisches Patentamt / European Patent Office / Office européen des brevets**

(11) **EP 3 181 025 B1**

(12) # FASCICULE DE BREVET EUROPEEN

(45) Date de publication et mention de la délivrance du brevet:
**17.04.2019 Bulletin 2019/16**

(51) Int Cl.:
*A47K 10/06* (2006.01)  *G05D 23/19* (2006.01)
*H05B 1/02* (2006.01)

(21) Numéro de dépôt: **16203417.7**

(22) Date de dépôt: **12.12.2016**

(54) **APPAREIL DE CHAUFFAGE, DE PRÉFÉRENCE DE TYPE SÈCHE-SERVIETTE, POUR LE CHAUFFAGE D'UNE SALLE DE BAIN**

HEIZVORRICHTUNG, BEVORZUGT EIN HANDTUCHTROCKNER, ZUR HEIZUNG EINES BADEZIMMERS

HEATING APPARATUS, PREFERABLY A TOWEL DRYER, FOR HEATING OF A BATHROOM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **17.12.2015 FR 1562582**

(43) Date de publication de la demande:
**21.06.2017 Bulletin 2017/25**

(73) Titulaire: **Atlantic Industrie**
**85000 La Roche sur Yon (FR)**

(72) Inventeurs:
• **CHAGNEAU, Antoine**
**85140 LES ESSARTS (FR)**

• **HUMBERT, Virgile**
**85180 LE CHATEAU D'OLONNE (FR)**
• **BERNARD, Maxime**
**85270 SAINT HILAIRE DE RIEZ (FR)**

(74) Mandataire: **Dutreix, Hugues Ours Ipsilon**
**3, rue Edouard Nignon**
**44300 Nantes (FR)**

(56) Documents cités:
**EP-A1- 2 367 087     EP-A1- 2 742 838**
**US-A- 4 623 969      US-B1- 8 600 561**

## Description

## DOMAINE DE L'INVENTION

La présente invention concerne de manière générale les appareils de chauffage de type radiateur sèche-serviette.

## ART ANTERIEUR

L'invention concerne plus particulièrement un appareil de chauffage de type radiateur sèche-serviette.

Il est connu, dans le domaine du chauffage, d'adapter le fonctionnement d'un corps de chauffe d'un appareil de chauffage électrique en fonction de la présence d'un utilisateur déterminée à l'aide d'un capteur de mouvement. Le document US 4,623,969 A décrit un appareil de chauffage selon le préambule de la revendication 1.

Cependant, dans le cas où l'appareil de chauffage est installé dans une salle de bain, on constate que les besoins de confort de chauffage de l'utilisateur sont différents selon l'usage qu'il fait de la salle de bain. En effet, lorsque l'utilisateur ne fait que se laver les mains, son besoin de confort de chauffage est moins important que lorsqu'il prend une douche.

Or, le capteur de mouvement ne suffit pas pour identifier l'usage que l'utilisateur fait de la salle de bain et adapter le fonctionnement du corps de chauffe audit usage.

La présente invention a pour but de proposer un nouvel appareil de chauffage électrique permettant de palier à tout ou partie des problèmes exposés ci-dessus.

En particulier un but de l'invention est de proposer un nouvel appareil de chauffage électrique, de préférence de type sèche-serviette électrique, permettant d'identifier un usage de type douche ou bain pour lequel le besoin de confort de chauffage de l'utilisateur est plus important que pour un usage du type pour lequel il est habillé.

## RESUME DE L'INVENTION

A cet effet, l'invention a pour objet un appareil de chauffage, de préférence de type sèche-serviette, pour le chauffage d'une salle de bain, ledit appareil comprenant :

- un corps de chauffe, de préférence électrique,
- un module de commande du corps de chauffe configuré pour commander le corps de chauffe en fonction d'une température de consigne ;
- un capteur de mouvement apte à acquérir un signal représentatif d'un mouvement, et
- un capteur de luminosité apte à acquérir un signal représentatif de la luminosité,

caractérisé en ce que l'appareil comporte en outre :

- un capteur d'humidité apte à acquérir un signal représentatif de l'humidité dans la salle de bain ;
- un module de traitement et de calcul apte à recevoir des signaux transmis par lesdits capteurs, ledit module de traitement et de calcul étant configuré pour :

  • calculer une donnée relative au mouvement, appelée donnée de mouvement, une donnée relative à la luminosité, appelée donnée de luminosité, et une donnée relative à l'humidité, appelée donnée d'humidité, à partir des signaux transmis lesdits capteurs, et
  • définir une température de consigne en fonction desdites données de mouvement, de luminosité et de l'humidité calculés.

L'utilisation d'un capteur d'humidité en combinaison avec un capteur de mouvement et un capteur de lumière permet de détecter de manière fiable et rapide un usage de type douche ou bain. Le corps de chauffe peut alors être piloté en fonction de l'usage détecté pour amener la température dans la salle de bain à une valeur correspondant au besoin de confort souhaité pour un tel usage.

Selon une caractéristique avantageuse de l'invention, le module de calcul et de traitement est configuré pour, après le calcul des données de mouvement, d'humidité et de luminosité:

• comparer chaque donnée calculée avec une valeur seuil et attribuer à ladite donnée calculée :

  • une valeur, appelée valeur de pertinence basse, de préférence 0, lorsque la valeur de ladite donnée calculée est inférieure à ladite valeur seuil, et

- • une valeur supérieure, appelée valeur de pertinence haute, de préférence 1, lorsque la valeur de ladite donnée calculée est supérieure à ladite valeur seuil ;

- • déterminer une valeur, appelée valeur de variation de probabilité, en fonction des valeurs de pertinence attribuées aux données et en fonction du type de ces données ;
- • déterminer une valeur, appelée valeur de probabilité de besoin de confort, en fonction de la valeur de variation de probabilité déterminée ;

et le module de calcul et de traitement est configuré pour définir ladite température de consigne en fonction de ladite valeur de probabilité de besoin de confort déterminée.

Ainsi les signaux acquis par les capteurs sont utilisés pour déterminer une variation de probabilité qui permet de corriger une probabilité de besoin de confort déterminée pour un horaire ultérieur, par exemple pour le même horaire mais le jour suivant ou la semaine suivante. Le besoin de chauffage peut ainsi être anticipé de manière fiable. Avantageusement, les étapes mises en oeuvre par le module de traitement et de calcul sont répétées de manière cyclique, par exemple tous les quarts d'heure.

Avantageusement, la variation de probabilité attribuée à la valeur de pertinence haute de la donnée d'humidité est supérieure à la valeur de variation de probabilité attribuée aux valeurs de pertinence haute des données de mouvement et de luminosité.

Le fait d'appliquer une pondération plus importante à la valeur de pertinence haute associée à la donnée d'humidité par rapport aux autres données calculées, permet d'améliorer encore la fiabilité de la détection d'un besoin de chauffage adapté à un usage de type douche ou bain, puisque l'humidité est davantage caractéristique d'un usage de type douche ou bain qu'un mouvement ou une luminosité donnée.

Selon une caractéristique avantageuse de l'invention, la donnée d'humidité calculée est la vitesse d'évolution de l'humidité, notée v_humidité.

Le fait de détecter un usage de type douche ou bain en fonction de la vitesse d'évolution de l'humidité permet de réduire le risque d'erreur de détection. Un tel paramètre de détection permet de ne pas tenir compte d'une augmentation de l'humidité qui serait due à une évolution des conditions météorologiques, dont la vitesse d'évolution est plus faible que celle de l'humidité dans le cas d'un usage de type douche ou bain.

Selon une caractéristique avantageuse de l'invention, l'appareil comprenant un module d'apprentissage de rythme de vie configuré pour établir des lois de commande de température de consigne destinées à être exécutées ultérieurement, de préférence de manière répétée, à partir des données de fonctionnement de l'appareil, ledit module d'apprentissage est aussi configuré pour établir une loi de commande en associant ladite température de consigne définie par le module de calcul et de traitement avec un horaire, appelé horaire de commande, et de préférence à un jour de semaine, défini en fonction de l'horaire, appelé horaire de définition, et de préférence du jour de semaine, auquel ladite température de consigne a été définie par le module de calcul et de traitement.

Selon une caractéristique avantageuse de l'invention, le module d'apprentissage de rythme de vie est configuré pour calculer l'horaire de commande comme étant égal à l'horaire de définition corrigé d'un temps d'anticipation prédéfini.

Selon une caractéristique avantageuse de l'invention, le temps d'anticipation de déclenchement de la température de consigne mémorisée est calculé en fonction de la différence entre la température de consigne et la température ambiante mémorisée à l'horaire de définition.

Selon une caractéristique avantageuse de l'invention, le calcul de la donnée de mouvement est réalisé en fonction de :

- une valeur de temps prédéfinie, appelée temps caractéristique,
- d'un nombre de mouvement prédéfini au cours dudit temps caractéristique, et
- du signal de mouvement transmis par le capteur de mouvement au module de traitement et de calcul.

Selon une caractéristique avantageuse de l'invention, le calcul de la donnée d'humidité est réalisé en fonction de :

- une valeur de temps prédéfinie, appelée temps caractéristique,
- une valeur de variation d'humidité, et
- du signal d'humidité transmis par le capteur d'humidité au module de traitement et de calcul.

Selon une caractéristique avantageuse de l'invention, le calcul de la donnée de luminosité est réalisé en fonction de :

- une valeur de temps prédéfinie, appelée temps caractéristique,
- une valeur de variation de luminosité,
- une valeur seuil de luminosité, et
- du signal de luminosité transmis par le capteur de luminosité au module de traitement et de calcul.

## BREVE DESCRIPTION DES DESSINS

D'autres caractéristiques et avantages de l'invention ressortiront encore de la description qui suit, laquelle est purement illustrative et non limitative et doit être lue en regard des dessins annexés, sur lesquels :

- la figure 1 est une vue schématique de face d'un appareil sèche-serviette conformément à un mode de réalisation de l'appareil selon l'invention;
- la figure 2 est un schéma bloc montrant la logique de traitement de signaux des capteurs et les étapes permettant de définir la température de consigne conformément à un mode de réalisation de l'appareil selon l'invention ;
- la figure 3 est un graphe montrant le nombre de mouvements détectés en fonction du temps conformément à un mode de réalisation de l'appareil selon l'invention ;
- la figure 4 est un graphe montrant l'humidité détectée en fonction du temps conformément à un mode de réalisation de l'appareil selon l'invention ;
- la figure 5 est un graphe montrant la luminosité détectée en fonction du temps conformément à un mode de réalisation de l'appareil selon l'invention ;
- la figure 6 est un graphe montrant la variation de probabilité déterminée en fonction du temps conformément à un mode de réalisation de l'appareil selon l'invention ;
- la figure 7 est un graphe montrant la probabilité de besoin de chauffage en mode confort déterminée en fonction du temps conformément à un mode de réalisation de l'appareil selon l'invention.

## DESCRIPTION DETAILLEE

Le concept de l'invention est décrit plus complètement ci-après avec référence aux dessins joints, sur lesquels des modes de réalisation du concept de l'invention sont montrés. Sur les dessins, la taille et les tailles relatives des éléments de l'appareil peuvent être exagérées à des fins de clarté. Des numéros similaires font référence à des éléments similaires sur tous les dessins. Cependant, ce concept de l'invention peut être mis en oeuvre sous de nombreuses formes différentes et ne devrait pas être interprété comme étant limité aux modes de réalisation exposés ici. Au lieu de cela, ces modes de réalisation sont proposés de sorte que cette description soit complète, et communiquent l'étendue du concept de l'invention aux hommes du métier. L'étendue de l'invention est par conséquent définie par les revendications jointes. Les modes de réalisation qui suivent sont examinés, par souci de simplification, en relation avec la terminologie et la structure d'un appareil de chauffage de type radiateur sèche-serviette. Cependant, les modes de réalisation qui seront examinés ensuite ne sont pas limités à ces appareils, mais peuvent être appliqués à d'autres appareils de chauffage.

Une référence dans toute la description à « un mode de réalisation » signifie qu'une fonctionnalité, une structure, ou une caractéristique particulière décrite en relation avec un mode de réalisation est inclue dans au moins un mode de réalisation de la présente invention. Ainsi, l'apparition de l'expression « dans un mode de réalisation » à divers emplacements de la description ne fait pas nécessairement référence au même mode de réalisation. En outre, les fonctionnalités, les structures, ou les caractéristiques particulières peuvent être combinées de n'importe quelle manière appropriée dans un ou plusieurs modes de réalisation.

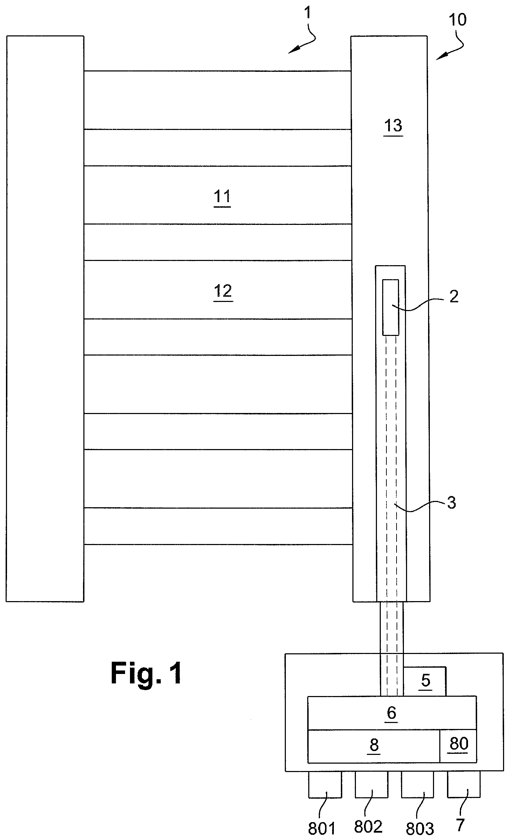

En référence aux figures et comme rappelé ci-dessus, l'invention concerne un appareil 1 de chauffage de type radiateur sèche-serviette. Dans le mode de réalisation de la figure 1, ledit appareil 1 de chauffage comprend une structure tubulaire 10 contenant un fluide caloporteur. Le fluide caloporteur peut être de l'eau ou de l'huile. Le sèche-serviette est destiné à être installé dans une salle de bain pour le chauffage de ladite salle de bain. Ledit appareil sèche-serviette peut bien entendu être aussi utilisé pour le séchage de serviettes. On entend par salle de bain, une pièce d'une habitation équipée d'une douche ou d'une baignoire.

Ladite structure tubulaire 10 présente au moins deux barreaux 11, 12 contenant un fluide caloporteur. Lesdits barreaux 11, 12 délimitent entre eux un espace permettant de faire reposer sur l'un 11 des barreaux, une serviette. Ladite structure tubulaire 10 comprend aussi une structure de liaison des barreaux 11, 12 entre eux, appelée cadre. Ledit cadre comprend deux éléments tubulaires 13 de liaison, appelés poteaux, reliant entre eux lesdits barreaux 11, 12 de manière à former un passage de communication de fluide entre les barreaux. Lesdits poteaux 13 s'étendent sensiblement transversalement auxdits barreaux 11, 12.

Le radiateur sèche-serviette comprend un corps de chauffe 3, de préférence électrique. Dans l'exemple illustré à la figure 1, le corps de chauffe 3 comprend un élément de chauffage électrique, tel qu'une résistance électrique, apte à chauffer ledit fluide caloporteur, et des moyens d'alimentation électrique 5 de l'élément 3 de chauffage électrique. Ledit élément 3 de chauffage électrique est logé au moins partiellement dans l'un des éléments tubulaires 13 de liaison et plonge ainsi dans le fluide caloporteur. Dans l'exemple illustré aux figures, l'appareil est à technologie fluide. Selon d'autres modes de réalisation, l'appareil peut être à technologie sèche. Autrement dit, l'appareil peut comprendre un ou plusieurs corps de chauffe qui ne sont pas en contact avec un liquide mais avec de l'air à l'intérieur du radiateur.

Dans le mode de réalisation de la figure 1, ledit appareil 1 comprend aussi une sonde de température 2 de fluide située à l'intérieur de la structure tubulaire 10. Ladite sonde de température 2 de fluide est apte à mesurer une valeur représentative de la température du fluide caloporteur au niveau duquel elle est située.

L'appareil comprend aussi un module commande 6 du corps de chauffe configuré pour commander le corps de chauffe 3 en fonction d'une température de consigne. Ladite température de consigne correspond à une température ambiante souhaitée. La commande du corps de chauffe pour atteindre la température de consigne peut être régulée en fonction de la température ambiante mesurée à l'aide d'une sonde 7 située à l'extérieur du fluide caloporteur pour mesurer la température de l'air ambiant et/ou peut être régulée en fonction de la température mesurée par la sonde 2 située à l'intérieur du circuit de fluide caloporteur.

Dans l'exemple illustré aux figures, ledit module commande 6 commande le corps de chauffe 3 en commandant le module d'alimentation électrique 5. A cet effet, ledit module de commande 6 commande l'alimentation électrique de l'élément 3 de chauffage électrique de manière à atteindre une température de consigne dont la définition est détaillée ci-après.

Ledit module commande 6 peut être réalisés sous forme d'une unité de commande électronique et/ou informatique, par exemple sous forme d'un thermostat. Ladite unité peut ainsi comprendre un circuit électronique muni d'un contrôleur ou d'un processeur, tels qu'un microcontrôleur ou d'un microprocesseur associé à une mémoire. Ainsi, lorsque dans la suite de la description, il est précisé que des moyens sont configurés pour réaliser une opération donnée, cela signifie que l'unité de commande qui forme lesdits moyens, comprend des instructions informatiques et/ou des composants électroniques dédiés permettant de réaliser ladite opération. Le module 5 d'alimentation électrique peut aussi être réalisé sous forme d'un module électronique.

L'appareil comprend une mémoire qui permet de mémoriser des lois de température de consigne. Chaque loi correspond à une définition de température de consigne sur des intervalles de temps ou cycles, répétables dans le temps. L'une des lois de température prédéfinie correspond à une mode de fonctionnement de l'appareil appelé mode confort pour lequel la température de consigne est adaptée à un usage de type douche ou bain. On peut prévoir que l'appareil comprend une mémoire dans laquelle sont mémorisés plusieurs modes de fonctionnement de l'appareil.

Le cycle sur lequel une loi est définie est découpé en intervalles de temps, appelés « pas de programmation », qui sont de préférence tous égaux. Sur chacun de ces pas de programmation, la loi est associée à une valeur de consigne. Dans la suite, on considère des pas de programmation d'une durée de 15 minutes, à titre d'exemple illustratif et non limitatif. A titre d'exemple, une même loi peut être mise en oeuvre pour tous les jours de la semaine, du lundi au dimanche. Une même loi peut également, selon une autre variante, être mise en oeuvre pour chaque jour de la semaine du lundi au vendredi, et une même loi ou deux lois distinctes pour les deux jours du week-end. Il est également envisageable qu'une loi distincte soit mise en oeuvre pour chaque jour de la semaine, entre le lundi et le vendredi. Une même loi ou deux lois distinctes peuvent alors être mises en oeuvre pour le week-end. En outre, les lois de programmation peuvent être définies sur des périodes de temps plus importantes, de l'ordre de la semaine, du mois ou de l'année, notamment. D'autres configurations de nombres de lois de programmation et de schémas de répétition sont évidemment possibles.

Préférentiellement, l'appareil comprend aussi une interface utilisateur qui permet notamment de :

- donner une température de consigne au module de commande pour un contrôle direct du module de commande,
- choisir un mode de fonctionnement à mettre en oeuvre ;
- modifier des paramètres du module d'apprentissage présenté ci-après.

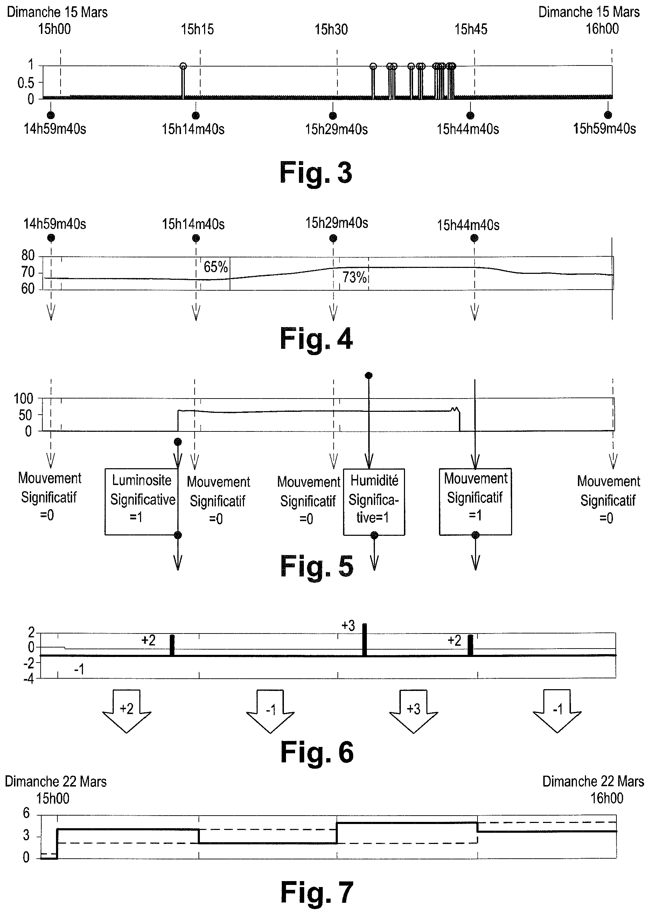

Dans l'exemple détaillé ci-après en lien avec les figures 3 à 7, on prend l'exemple d'une loi de température de consigne mise en oeuvre un dimanche de 15h00 à 16h00 et destinée à être répétée le dimanche de la semaine suivante mais avec des valeurs de température de consigne modifiées résultant d'une fonction d'apprentissage mise en oeuvre par un module d'apprentissage 80.

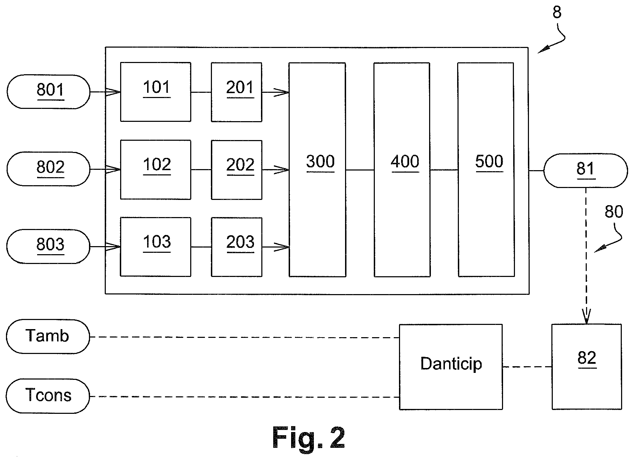

Comme illustré aux figures 1 et 2, l'appareil 1 comprend aussi un capteur de mouvement 801, par exemple un capteur infrarouge, apte à acquérir un signal représentatif d'un mouvement, et un capteur de luminosité 802 apte à acquérir un signal représentatif de la luminosité. L'appareil comprend aussi un capteur d'humidité 803 apte à acquérir un signal représentatif de l'humidité dans la salle de bain.

Un module de traitement et de calcul 8 est connecté de manière filaire ou radio auxdits capteurs 801, 802, 803 pour recevoir des signaux transmis par lesdits capteurs. Le module de traitement et de calcul 8 fonctionne de manière cyclique avec un pas de temps donné de 10 secondes par exemple.

Ledit module de traitement et de calcul 8 peut être réalisé au sein d'une même unité électronique et/ou informatique que celle permettant de réaliser ledit module de commande 6. En particulier, lesdits modules peuvent être réalisés sous forme de composants informatiques et/ou électroniques. Ainsi, les fonctions opérées par ces modules peuvent être réalisées par des jeux d'instructions informatiques implémentées dans un processeur ou être réalisées par des composants électroniques dédiés ou des composants de type FPGA ou ASIC. Il est aussi possible de combiner des parties informatiques et des parties électroniques.

Comme illustré à la figure 2, ledit module de traitement et de calcul 8 comprend des blocs de jeux d'instructions 101, 102,103 pour calculer, une donnée relative au mouvement, appelée donnée de mouvement, une donnée relative à la luminosité, appelée donnée de luminosité, et une donnée relative à l'humidité, appelée donnée d'humidité, à partir des signaux transmis lesdits capteurs.

Après le calcul des données de mouvement, d'humidité et de luminosité, le module de calcul et de traitement 8 exécute des blocs de jeu d'instructions 201, 202, 203 permettant de comparer chaque donnée calculée avec une valeur seuil.

Une valeur, appelée valeur de pertinence basse, de préférence 0, est alors attribuée à ladite donnée calculée lorsque la valeur de ladite donnée calculée est inférieure à ladite valeur seuil. Sinon, une valeur de pertinence supérieure, appelée valeur de pertinence haute, de préférence 1, est attribuée à ladite donnée calculée lorsque la valeur de ladite donnée calculée est supérieure à ladite valeur seuil.

Puis, le module de traitement et de calcul 8 exécute un bloc d'instructions 300 pour déterminer une valeur, appelée valeur de variation de probabilité en fonction des valeurs de pertinence attribuées aux données et en fonction du type de ces données.

La détermination de la valeur de variation de probabilité permet de mettre les résultats de traitement de signaux des capteurs dans une forme utilisable pour la construction d'une loi de température adaptée à l'usage prévu de la salle de bain à un horaire ultérieur, par exemple pour le lendemain ou la semaine suivante.

Lorsque toutes les données calculées présentent une valeur de pertinence basse, le bloc d'instructions 300 détermine que la valeur de variation de probabilité est égale à une valeur négative. Lorsque plusieurs données calculées présentent une valeur de pertinence haute, la valeur de variation de probabilité est déterminée comme étant égale à la plus grande valeur de pertinence haute parmi lesdites données calculées.

A titre d'exemple, on peut prévoir que le module de traitement et de calcul procède comme suit :

- si l'évolution du signal d'humidité est significative, alors la variation de la probabilité est de +3 ;
- si l'évolution du signal de mouvement est significative, alors la variation de probabilité est de +2 ;
- si l'évolution du signal de luminosité est significative, alors la variation de probabilité est de +2 ;
- si aucun signal ne montre une évolution significative, alors la variation de probabilité de -1.

Les signaux de mouvement et de luminosité sont moins fiables que celui d'humidité pour caractériser les moments de présence nécessitant du confort. Ils permettent de détecter des utilisations de la salle de bain autres que les prises de douches ou de bains, mais sont sensibles au positionnement du sèche-serviettes dans la pièce et aux obstacles optiques dans l'environnement de celui-ci. C'est pourquoi l'appareil est configuré de sorte qu'une évolution significative de l'humidité génère une plus importante variation de la probabilité.

Le module de traitement et de calcul 8 détermine alors à l'aide d'un bloc de détermination 400 une valeur de probabilité de besoin de confort, en fonction de la valeur de variation de probabilité déterminée.

En particulier, la valeur de probabilité de besoin de confort est calculée par ajout de la plus grande valeur de variation de probabilité à une valeur de probabilité qui a été définie ou calculée antérieurement, par exemple la semaine précédente, pour l'horaire en cours, et qui est associée à l'horaire au cours duquel ledit calcul est effectué.

Le module de calcul et de traitement 8 comprend un bloc de définition 500 qui permet alors de définir une température de consigne en fonction de ladite valeur de probabilité de besoin de confort déterminée. Autrement dit, le bloc de définition 500 convertit la valeur de probabilité de besoin de confort en température de consigne.

Comme détaillé ci-après, cette température de consigne est mémorisée par le module d'apprentissage 80 qui l'associe à un horaire ultérieur défini en fonction de l'horaire courant auquel ladite température de consigne a été définie.

La température de consigne ainsi définie est destinée à être utilisée pour construire le signal de commande ultérieur du corps de chauffe afin de répondre au besoin de confort associé correspondant à ladite température de consigne définie.

Dans l'exemple illustré aux figures, la donnée d'humidité calculée est la vitesse d'évolution de l'humidité, notée v_humidité, calculée selon la formule :

$$v\_humidité = (humidité (t\_0+t\_humidité) - humidité (t\_0)) / t\_humidité$$

avec humidité (t_0) étant la valeur de l'humidité mesurée à un instant t_0 donné ;
t_ humidité étant une durée prédéfinie, par exemple 15 minutes ;
humidité (t_0+t_ humidité) étant la valeur de l'humidité mesurée au temps t_0+t_ humidité;

Pour éliminer les cas de "faux départ ", le module de traitement et de calcul est configuré de sorte que si après une détection d'augmentation de l'humidité celle-ci redescend en-dessous de la valeur qu'elle avait au départ, le module de traitement et de calcul procède à une réinitialisation du calcul de la donnée d'humidité.
Le calcul de la donnée de mouvement est réalisé en fonction de :

- une valeur de temps prédéfinie, appelée temps caractéristique, par exemple 15 minutes ;
- d'un nombre de mouvement prédéfini au cours dudit temps caractéristique, et
- du signal de mouvement transmis par le capteur de mouvement au module de traitement et de calcul 8.

Ledit nombre de mouvement prédéfini au cours dudit temps caractéristique correspond à un nombre de mouvements détectés reflétant un besoin de chauffage en mode CONFORT, par exemple 10 mouvements détectés.
Ladite valeur de temps caractéristique correspond au temps caractéristique d'un ensemble d'événements impactant le mouvement, et reflétant un besoin de chauffage en mode CONFORT. La donnée de mouvement calculée correspond ainsi au nombre de mouvement durant le temps caractéristique
La combinaison des deux paramètres de nombre de mouvement et de temps caractéristique peut être vue comme une densité de détections de mouvements sur une durée fixe.
Le calcul de la donnée d'humidité est réalisé en fonction de :

- une valeur de temps prédéfinie, appelée temps caractéristique, par exemple 15 minutes
- une valeur de variation d'humidité, et
- du signal d'humidité transmis par le capteur d'humidité au module de traitement et de calcul 8.

La donnée d'humidité calculée correspond à la variation d'humidité durant le temps caractéristique. La valeur de temps caractéristique correspond au temps caractéristique d'un évènement impactant l'humidité, et reflétant un besoin de chauffage en mode CONFORT.
La valeur de variation d'humidité correspond à la variation d'humidité d'un évènement reflétant un besoin de chauffage en mode CONFORT.
Le calcul de la donnée de luminosité est réalisé en fonction de :

- une valeur de temps prédéfinie, appelée temps caractéristique,
- une valeur de variation de luminosité,
- une valeur seuil de luminosité, et
- du signal de luminosité transmis par le capteur de luminosité au module de traitement et de calcul.

La limite haute de luminosité permet de filtrer les évènements naturels indésirables. La donnée de luminosité calculée correspond ainsi à la variation de luminosité durant le temps caractéristique. Ledit temps caractéristique correspond au temps caractéristique d'un évènement impactant la luminosité, et reflétant un besoin de chauffage mode CONFORT.
La combinaison des trois paramètres de temps caractéristique, variation de luminosité seuil de luminosité, peut être vue comme une vitesse d'évolution de la luminosité moyenne sur une durée fixe, avec une limite de niveau de luminosité.
Comme rappelé ci-dessus, l'appareil comprend un module 80 d'apprentissage de rythme de vie configuré pour établir des lois de commande de température de consigne destinées à être exécutées ultérieurement, de préférence de manière répétée, à partir des données de fonctionnement de l'appareil.
Ledit module d'apprentissage 80 peut être réalisé de la même manière que les autres modules sous forme d'une unité électronique et/ou informatique.
Ledit module 80 d'apprentissage de rythme de vie est configuré pour établir une loi de commande en associant ladite température de consigne définie par le module de calcul et de traitement 8 avec un horaire, appelé horaire de commande. Ledit horaire de commande est défini en fonction de l'horaire, appelé horaire de définition, auquel ladite température de consigne a été définie par le module de calcul et de traitement 8.

A l'aide d'un bloc d'instructions 81, le module d'apprentissage 80 associe la température de consigne ainsi définie au pas de temps correspondant. Un pas de temps correspond à un quart d'heure dans l'exemple illustré aux figures.

Selon un mode de réalisation préféré et illustré à la figure 2, le module 80 d'apprentissage de rythme de vie comprend aussi un bloc de correction 82 configuré pour calculer l'horaire de commande de ladite température de consigne comme étant égal à l'horaire de définition corrigé d'un temps d'anticipation Danticip prédéfini. Le temps d'anticipation Danticip de commande de la température de consigne mémorisée est calculé en fonction de la différence entre la température de consigne Tcons définie et la température ambiante Tamb mémorisée à l'horaire de définition.

Ainsi, le module d'apprentissage 8 définit une loi de température de consigne corrigée par le temps d'anticipation Danticip, ce qui permet d'atteindre la température de consigne dès le début du pas de temps correspondant.

Les figures 3 à 7 détaillées ci-dessous illustrent un exemple de définition de température de consigne en fonction des signaux transmis par les capteurs et un exemple d'apprentissage d'une loi de commande correspondante pour un jour de la semaine suivante par rapport à la loi mise en oeuvre pour le jour correspondant de la semaine en cours.

La durée d'occupation de la salle de bain pour une utilisation nécessitant un chauffage de niveau de température de consigne correspondant au mode CONFORT est d'approximativement quinze minutes. Ainsi dans l'exemple illustré aux figures 3 à 7, le module d'apprentissage 80 est configuré pour mémoriser le rythme de vie par tranche de quart d'heure pour chaque jour de la semaine.

Comme rappelé ci-dessus le module de traitement et de calcul 8 fonctionne cycliquement avec un pas de temps de 10 secondes. Ainsi, en pratique, le passage du pas de temps de 10 seconde du module de traitement et de calcul, au pas de temps de 15 minutes de la logique de programmation du module d'apprentissage 80 et donc du module de commande 6, est réalisé en décalant le pas de temps de 15 minutes de 10 secondes par rapport au quart d'heure complet correspondant.

En outre, les signaux transmis par le capteur de mouvement au module de traitement et de calcul sont découpés en périodes de temps d'une durée correspondant au temps caractéristique défini, ici 15min. En pratique, le découpage commence 20 secondes avant le 1er quart d'heure suivant le démarrage. Cela permet de :

- synchroniser les déterminations de valeurs de pertinence de mouvement (détections significatives ou non) et les quarts d'heures de programmation,
- tenir compte d'une éventuelle valeur de pertinence haute de mouvement déterminée lors du quart d'heure en cours, pour la détermination de la variation de probabilité qui se fait 10 secondes avant la fin dudit quart d'heure.

La figure 3 est un graphique représentant les mouvements détectés en fonction du temps. Sur le graphique, il apparait ainsi qu'un mouvement a été détecté entre 15h00 et 15h15. Cet unique mouvement rapporté au temps caractéristique prédéfini n'est pas considéré comme significatif. En effet le nombre de mouvement prédéfini utilisé pour définir la valeur seuil correspondante est par exemple de 10, de sorte que 20 secondes avant 15h15 la valeur de pertinence associée à la donnée de mouvement est la valeur 0.

Inversement, entre 15h30 et 15h45, on constate qu'un nombre de mouvement supérieur à celui prédéfini pour le calcul de la valeur seuil correspondante a été détecté. Il en résulte que 20 secondes avant 15h45, la valeur de pertinence associée à la donnée de mouvement est la valeur 1. A la fin du quart d'heure suivant, 20 secondes avant à 16h, la valeur de pertinence associée à la donnée de mouvement est de nouveau 0 puisqu'aucun mouvement n'a été détecté sur ledit quart d'heure.

La figure 4 est un graphique représentant l'humidité détectée (en pourcentage) en fonction du temps. Sur le graphique, il apparait ainsi que l'humidité est stable à 66% entre 15h00 et 15h15. La vitesse d'évolution de l'humidité est ainsi inférieure à la valeur seuil correspondante de sorte que la valeur de pertinence associée à l'humidité détectée est égale à 0.

Puis l'humidité augmente jusqu'à atteindre un palier à 73%, de sorte qu'un peu après 15h30, la vitesse d'évolution de l'humidité sur le quart d'heure « glissant » précédent est supérieure à la valeur seuil prédéfinie correspondante. La valeur de pertinence associée à l'humidité détectée est alors égale à 1.

La figure 5 est un graphique représentant la luminosité détectée (en lux) en fonction du temps. La valeur limite au delà de laquelle la mesure est coupée est de 100 lux. Sur le graphique, il apparait ainsi que la luminosité détectée est nulle jusqu'à un peu avant 15h15, puis passe sensiblement instantanément à 70% et reste à cette valeur jusqu'à un peu avant 15h45, après quoi la luminosité détectée est de nouveau nulle. Ainsi, la valeur de pertinence associée à la luminosité est égale à 1 peu avant 15h15.

Le graphique de la figure 5 donne les valeurs de variation de probabilité déterminées en fonction du temps. Avant 15h00, la valeur de variation de probabilité déterminée était égale à -1 du fait que les valeurs de pertinence de l'ensemble des données de mouvement, d'humidité et de luminosité calculées étaient égale à 0.

La valeur de variation de probabilité déterminée sur le créneau 15h00 - 15h15 est de +2 du fait de la valeur de pertinence en haute de la luminosité détectée peu avant 15h15. Pour le créneau 15h15-15h30, la valeur de variation de probabilité déterminée redevient égale à -1, du fait de l'absence de mouvement détecté, de l'absence d'évolution croissante de luminosité détectée et du fait d'une vitesse d'évolution d'humidité trop faible sur ce créneau.

Mais pour le créneau suivant 15h30-15h45, la valeur de variation de probabilité déterminée est de +3 du fait que, un peu après 15h30, la vitesse d'évolution d'humidité, prise sur un temps caractéristique de 15 minutes est considérée comme significative (valeur de pertinence haute). On constate aussi que sur ce créneau le nombre de mouvement détecté est significatif de sorte qu'une valeur de variation de probabilité de + 2 serait déterminée en l'absence de valeur de pertinence haute de l'humidité. Mais, la détection de ces mouvements significatif n'impacte pas la détermination de la variation de probabilité qui est de +3 du fait de la détermination d'une humidité significative.

La figure 6 est un graphique donnant les valeurs de probabilité de besoin de confort selon les créneaux horaires, compte tenu des variations de probabilité associées. La courbe en traits interrompus donne la probabilité de besoin de confort déterminée précédemment, par exemple la semaine précédente, pour la semaine en cours, tandis que La courbe en trait continu donne la probabilité de besoin de confort déterminée pour la semaine suivante en fonction desdites valeurs de variation de probabilité déterminée et en fonction de ladite probabilité de besoin de confort déterminée précédemment pour la semaine en cours.

Ainsi, avant 15h00, la probabilité de besoin de confort est égale 1 pour la semaine en cours, de sorte que la probabilité de besoin de confort passe à 0 du fait de la variation de probabilité de -1. Pour le créneau 15h00-15h15, la probabilité de besoin de confort est égale 2 pour la semaine en cours, de sorte que la probabilité de besoin de confort passe à 4 pour la semaine suivante du fait de la variation de probabilité déterminée de 2 qui s'ajoute à la valeur de probabilité de besoin de confort de la semaine en cours. Pour le créneau 15h15-15h30, la probabilité de besoin de confort est égale à 2 pour la semaine en cours, de sorte que la probabilité de besoin de confort passe à 4 pour la semaine suivante du fait de la variation de probabilité déterminée de 2 qui s'ajoute à la valeur de probabilité de besoin de confort de la semaine en cours. De même, les valeurs de probabilité pour les créneaux 15h30-15h45 puis 15h45 - 16h00 passent respectivement de 2 à 5 puis de 5 à 4.

Ces probabilités traduisent une certitude plus ou moins forte d'un besoin de chauffage selon le mode CONFORT. Pour rappel le mode confort correspond à une température de consigne Tconf de, par exemple, 22° adaptée à un usage de type douche ou bain de la salle de bain.

En pratique, le module d'apprentissage comprend une matrice représentant l'ensemble des quarts d'heure d'une semaine à chacun desquels est associée une température de consigne. Cette température de consigne définie comme ci-dessus est mise à jour 10 seconde avant la fin du quart d'heure correspondant.

Lorsque la probabilité est très faible, par exemple 0 ou 1, la température de consigne est définie comme étant égale à la température de consigne du mode CONFORT, notée Tconf, minorée de 3°. Lorsque la probabilité est de 2, la température de consigne est définie comme étant égale à la température Tconf minorée de 2°. Lorsque la probabilité est de 3, la température de consigne est définie comme étant égale à la température Tconf minorée de 1°. Lorsque la probabilité est supérieure ou égale à 4, la température de consigne est définie comme étant égale à la température Tconf.

L'invention n'est pas limitée aux modes de réalisation illustrés dans les dessins. En conséquence, il doit être entendu que, lorsque les caractéristiques mentionnées dans les revendications annexées sont suivies par des signes de référence, ces signes sont inclus uniquement dans le but d'améliorer l'intelligibilité des revendications et ne sont nullement limitatifs de la portée des revendications.

De plus, le terme « comprenant » n'exclut pas d'autres éléments ou étapes. En outre, des caractéristiques ou étapes qui ont été décrites en référence à l'un des modes de réalisation exposés ci-dessus peuvent également être utilisées en combinaison avec d'autres caractéristiques ou étapes d'autres modes de réalisation exposés ci-dessus.


**Revendications**

**1.** Appareil de chauffage, de préférence de type sèche-serviette, pour le chauffage d'une salle de bain, ledit appareil comprenant :

    - un corps de chauffe (3), de préférence électrique,
    - un module de commande (6) du corps de chauffe configuré pour commander le corps de chauffe (3) en fonction d'une température de consigne ;
    - un capteur de mouvement (801) apte à acquérir un signal représentatif d'un mouvement, et
    - un capteur de luminosité (802) apte à acquérir un signal représentatif de la luminosité,

    **caractérisé en ce que** l'appareil comporte en outre :

    - un capteur d'humidité (803) apte à acquérir un signal représentatif de l'humidité dans la salle de bain ;
    - un module de traitement et de calcul (8) apte à recevoir des signaux transmis par lesdits capteurs, ledit module

EP 3 181 025 B1

de traitement et de calcul (8) étant configuré pour :

- calculer (101, 102, 103) une donnée relative au mouvement, appelée donnée de mouvement, une donnée relative à la luminosité, appelée donnée de luminosité, et une donnée relative à l'humidité, appelée donnée d'humidité, à partir des signaux transmis lesdits capteurs, et
- définir (500) une température de consigne (CONFORT-3 ;... ; CONFORT) en fonction desdites données de mouvement, de luminosité et de l'humidité calculés.

2. Appareil selon la revendication 1, **caractérisé en ce que** le module de calcul et de traitement (8) est configuré pour, après le calcul (101, 102, 103) des données de mouvement, d'humidité et de luminosité :

- comparer (201, 202, 203) chaque donnée calculée avec une valeur seuil et attribuer à ladite donnée calculée :

  - une valeur, appelée valeur de pertinence basse, de préférence 0, lorsque la valeur de ladite donnée calculée est inférieure à ladite valeur seuil, et
  - une valeur supérieure, appelée valeur de pertinence haute, de préférence 1, lorsque la valeur de ladite donnée calculée est supérieure à ladite valeur seuil ;

- déterminer (301, 302, 303) une valeur, appelée valeur de variation de probabilité, en fonction des valeurs de pertinence attribuées aux données et en fonction du type de ces données ;
- déterminer (400) une valeur, appelée valeur de probabilité de besoin de confort, en fonction de la valeur de variation de probabilité déterminée ;

et **en ce que** le module de calcul et de traitement (8) est configuré pour définir (500) ladite température de consigne en fonction de ladite valeur de probabilité de besoin de confort déterminée.

3. Appareil selon l'une des revendications précédentes, **caractérisé en ce que** la variation de probabilité attribuée à la valeur de pertinence haute de la donnée d'humidité est supérieure à la valeur de variation de probabilité attribuée aux valeurs de pertinence haute des données de mouvement et de luminosité.

4. Appareil selon l'une des revendications précédentes, **caractérisé en ce que** la donnée d'humidité calculée est la vitesse d'évolution de l'humidité, notée v_humidité.

5. Appareil selon l'une des revendications précédentes, **caractérisé en ce que**, l'appareil comprenant un module (80) d'apprentissage de rythme de vie configuré pour établir des lois de commande de température de consigne destinées à être exécutées ultérieurement, de préférence de manière répétée, à partir des données de fonctionnement de l'appareil,
ledit module (80) d'apprentissage est aussi configuré pour établir une loi de commande en associant ladite température de consigne définie par le module de calcul et de traitement (8) avec un horaire, appelé horaire de commande, et de préférence à un jour de semaine, défini en fonction de l'horaire, appelé horaire de définition, et de préférence du jour de semaine, auquel ladite température de consigne a été définie par le module de calcul et de traitement (8).

6. Appareil selon la revendication 5, **caractérisé en ce que** le module (80) d'apprentissage de rythme de vie est configuré pour calculer l'horaire de commande comme étant égal à l'horaire de définition corrigé d'un temps d'anticipation (Danticip) prédéfini.

7. Appareil selon la revendication 6, **caractérisé en ce que** le temps d'anticipation (Danticip) de déclenchement de la température de consigne mémorisée est calculé en fonction de la différence entre la température de consigne et la température ambiante (Tamb) mémorisée à l'horaire de définition.

8. Appareil selon l'une des revendications précédentes, **caractérisé en ce que** le calcul de la donnée de mouvement est réalisé en fonction de :

  - une valeur de temps prédéfinie, appelée temps caractéristique,
  - d'un nombre de mouvement prédéfini au cours dudit temps caractéristique, et
  - du signal de mouvement transmis par le capteur de mouvement au module de traitement et de calcul (8).

9. Appareil selon l'une des revendications précédentes, **caractérisé en ce que** le calcul de la donnée d'humidité est réalisé en fonction de :

- une valeur de temps prédéfinie, appelée temps caractéristique,
- une valeur de variation d'humidité, et
- du signal d'humidité transmis par le capteur d'humidité au module de traitement et de calcul (8).

10. Appareil selon l'une des revendications précédentes, **caractérisé en ce que** le calcul de la donnée de luminosité est réalisé en fonction de :

- une valeur de temps prédéfinie, appelée temps caractéristique,
- une valeur de variation de luminosité,
- une valeur seuil de luminosité, et
- du signal de luminosité transmis par le capteur de luminosité au module de traitement et de calcul.

**Patentansprüche**

1. Heizvorrichtung, vorzugsweise vom Typ Handtuchtrockner, zum Beheizen eines Badezimmers, wobei die Vorrichtung umfasst:

- einen in bevorzugter Weise elektrischen Heizkörper (3),
- ein Steuermodul (6) des Heizkörpers, das konfiguriert ist, um den Heizkörper (3) in Abhängigkeit von einer Solltemperatur zu steuern,
- einen Bewegungsmelder (801), der imstande ist, ein Signal zu ermitteln, das für eine Bewegung repräsentativ ist, und
- einen Lichtstärkesensor (802), der imstande ist, ein Signal zu ermitteln, das für die Lichtstärke repräsentativ ist,

**dadurch gekennzeichnet, dass** die Vorrichtung ferner aufweist:

- einen Feuchtigkeitssensor (803), der imstande ist, ein Signal zu ermitteln, das für die Feuchtigkeit im Badezimmer repräsentativ ist,
- ein Verarbeitungs- und Rechenmodul (8), das imstande ist, Signale zu empfangen, die von den Sensoren übertragen werden, wobei das Verarbeitungs- und Rechenmodul (8) konfiguriert ist, um:

  • eine Angabe zu berechnen (101, 102, 103), die sich auf die Bewegung bezieht, bezeichnet als Bewegungsangabe, eine Angabe, die sich auf die Lichtstärke bezieht, bezeichnet als Lichtstärkeangabe, und eine Angabe, die sich auf die Feuchtigkeit bezieht, bezeichnet als Feuchtigkeitsangabe, ausgehend von den von den Sensoren übertragenen Signalen, und
  • eine Solltemperatur (KOMFORT-3; ...; KOMFORT) in Abhängigkeit von den berechneten Bewegungs-, Lichtstärke- und Feuchtigkeitsangaben festzulegen (500).

2. Vorrichtung nach Anspruch 1, **dadurch gekennzeichnet, dass** das Verarbeitungs- und Rechenmodul (8) konfiguriert ist, um nach der Berechnung (101, 102, 103) der Bewegungs-, Feuchtigkeits- und Lichtstärkeangaben:

  • jede berechnete Angabe mit einem Grenzwert zu vergleichen (201, 202, 203) und der berechneten Angabe zuzuweisen:

    - einen Wert, bezeichnet als Wert niedriger Relevanz, von vorzugsweise 0, wenn der Wert der berechneten Angabe niedriger als der Grenzwert ist, und
    - einen höheren Wert, bezeichnet als Wert hoher Relevanz, von vorzugsweise 1, wenn der Wert der berechneten Angabe höher als der Grenzwert ist,

  • einen Wert, bezeichnet als Wahrscheinlichkeitsänderungswert, in Abhängigkeit von den den Angaben zugewiesenen Relevanzwerten und in Abhängigkeit vom Typ dieser Angaben zu bestimmen (301, 302, 303),
  • einen Wert, bezeichnet als Komfortbedarfswahrscheinlichkeitswert, in Abhängigkeit von dem bestimmten Wahrscheinlichkeitsänderungswert zu bestimmen (400),

und dass das Verarbeitungs- und Rechenmodul (8) konfiguriert ist, um die Solltemperatur in Abhängigkeit von dem bestimmten Komfortbedarfswahrscheinlichkeitswert festzulegen (500).

3. Vorrichtung nach einem der vorangehenden Ansprüche, **dadurch gekennzeichnet, dass** die dem Wert hoher Relevanz der Feuchtigkeitsangabe zugewiesene Wahrscheinlichkeitsänderung größer ist als der den Werten hoher Relevanz der Bewegungs- und Lichtstärkeangaben zugewiesene Wahrscheinlichkeitsänderungswert.

4. Vorrichtung nach einem der vorangehenden Ansprüche, **dadurch gekennzeichnet, dass** die berechnete Feuchtigkeitsangabe die Geschwindigkeit der Entwicklung der Feuchtigkeit v_Feuchtigkeit ist.

5. Vorrichtung nach einem der vorangehenden Ansprüche, **dadurch gekennzeichnet, dass**, wobei die Vorrichtung ein Lebensrhythmuslernmodul (80) umfasst, das konfiguriert ist, um ausgehend von Funktionsangaben der Vorrichtung Solltemperatursteuergesetze zu erstellen, die für die spätere, vorzugsweise wiederholte Ausführung bestimmt sind,
das Lernmodul (80) ebenfalls konfiguriert ist, um ein Steuergesetz durch Kombinieren der von dem Verarbeitungs- und Rechenmodul (8) festgelegten Solltemperatur mit einer Zeit, bezeichnet als Steuerzeit, und vorzugsweise mit einem Wochentag, in Abhängigkeit von der Zeit, bezeichnet als Festlegungszeit, festgelegten Wochentag, und vorzugsweise dem Wochentag, an dem die Solltemperatur von den Verarbeitungs- und Rechenmodul (8) festgelegt wurde, zu erstellen.

6. Vorrichtung nach Anspruch 5, **dadurch gekennzeichnet, dass** das Lebensrhythmuslernmodul (80) konfiguriert ist, um die Steuerzeit als gleich der durch eine vorher festgelegte Vorgriffszeit (Danticip) korrigierte Festlegungszeit zu berechnen.

7. Vorrichtung nach Anspruch 6, **dadurch gekennzeichnet, dass** die Vorgriffszeit (Danticip) des Auslösens der gespeicherten Solltemperatur in Abhängigkeit von der Differenz zwischen der Solltemperatur und der zur Festlegungszeit gespeicherten Raumtemperatur (Tamb) berechnet wird.

8. Vorrichtung nach einem der vorangehenden Ansprüche, **dadurch gekennzeichnet, dass** die Berechnung der Bewegungsangabe durchgeführt wird in Abhängigkeit von:

   - einen vorher festgelegten Zeitwert, bezeichnet als charakteristische Zeit,
   - einer vorher festgelegten Bewegungsanzahl während der charakteristischen Zeit, und
   - dem Bewegungsmelder an das Verarbeitungs- und Rechenmodul (8) übertragenen Bewegungssignal.

9. Vorrichtung nach einem der vorangehenden Ansprüche, **dadurch gekennzeichnet, dass** die Berechnung der Feuchtigkeitsangabe durchgeführt wird in Abhängigkeit von:

   - einem vorher festgelegten Zeitwert, bezeichnet als charakteristische Zeit,
   - einem Feuchtigkeitsänderungswert, und
   - dem von dem Feuchtigkeitssensor an das Verarbeitungs- und Rechenmodul (8) übertragenen Feuchtigkeitssignal.

10. Vorrichtung nach einem der vorangehenden Ansprüche, **dadurch gekennzeichnet, dass** die Berechnung der Lichtstärkeangabe durchgeführt wird in Abhängigkeit von:

   - einem vorher festgelegten Zeitwert, bezeichnet als charakteristische Zeit,
   - einem Lichtstärkeänderungswert,
   - einem Lichtstärkegrenzwert, und
   - dem von dem Lichtstärkesensor an das Verarbeitungs- und Rechenmodul übertragenen Lichtstärkesignal.

**Claims**

1. A heating apparatus, preferably of the towel-dryer type, for heating a bathroom, said apparatus comprising:

   - a heating body (3), preferably electric,
   - a control module (6) of the heating body configured to control the heating body (3) as a function of an input temperature;

- a movement sensor (801) capable of acquiring a signal representative of a movement, and
- a brightness sensor (802) capable of acquiring a signal representative of the brightness, **characterized in that** the apparatus further includes:
- a humidity sensor (803) capable of acquiring a signal representative of the humidity in the bathroom;
- a processing and computing module (8) capable of receiving signals sent by said sensors, said processing and computing module (8) being configured to:

  • compute (101, 102, 103) a datum relative to the movement, called movement datum, a datum relative to the brightness, called brightness datum, and a datum relative to the humidity, called humidity datum, from signals sent said sensors, and
  • define (500) an input temperature (CONFORT-3; ...; CONFORT) as a function of said computed movement, brightness and humidity data.

2. The apparatus according to claim 1, **characterized in that** the computing and processing module (8) is configured, after computing (101, 102, 103) the movement, humidity and brightness data, to:

  • compare (201, 202, 203) each computed datum with a threshold value and assign said computed datum:

    - a value, called low relevance value, preferably 0, when the value of said computed datum is below said threshold value, and
    - an upper value, called high relevance value, preferably 1, when the value of said computed datum is above said threshold value;

  • determine (301, 302, 303) a value, called probability variation value, as a function of the relevance values assigned to the data and as a function of the type of said data;
  • determine (400) a value, called comfort need probability value, as a function of the determined probability variation value;

and **in that** the computing and processing module (8) is configured to define (500) said input temperature as a function of said determined comfort need probability value.

3. The apparatus according to one of the preceding claims, **characterized in that** the probability variation assigned to the high relevance value of the humidity datum is greater than the probability variation value assigned to the high relevance values of the movement and brightness values.

4. The apparatus according to one of the preceding claims, **characterized in that** the computed humidity datum is the evolution speed of the humidity, denoted v_humidity.

5. The apparatus according to one of the preceding claims, **characterized in that**, the apparatus comprising a living rhythm learning module (80) configured to establish input temperature control laws intended to be executed later, preferably repeatedly, from operating data of the apparatus, said learning module (80) is also configured to establish a control law by associating said input temperature defined by the calculating and processing module (8) with a schedule, called control schedule, and preferably a day of the week, defined as a function of the schedule, called definition schedule, and preferably the day of the week, on which the input temperature was defined by the computing and processing module (8).

6. The apparatus according to claim 5, **characterized in that** the living rhythm learning module (80) is configured to calculate the control schedule as being equal to the definition schedule corrected by a predefined anticipation time (Danticip).

7. The apparatus according to claim 6, **characterized in that** the anticipation time (Danticip) for triggering the stored input temperature is calculated as a function of the difference between the input temperature and the ambient temperature (Tamb) stored in the definition schedule.

8. The apparatus according to one of the preceding claims, **characterized in that** the computation of the movement datum is done as a function of:

  - a predefined time value, called characteristic time,

- a predefined movement number during said characteristic time, and
- the movement signal sent by the movement sensor to the processing and computing module (8).

9. The apparatus according to one of the preceding claims, **characterized in that** the computation of the humidity datum is done as a function of:

- a predefined time value, called characteristic time,
- a humidity variation value, and
- the humidity signal sent by the humidity sensor to the processing and computing module (8).

10. The apparatus according to one of the preceding claims, **characterized in that** the computation of the brightness datum is done as a function of:

- a predefined time value, called characteristic time,
- a brightness variation value,
- a brightness threshold value, and
- the brightness signal sent by the brightness sensor to the processing and computing module.

Fig. 1

8

801 → 101 → 201 →

802 → 102 → 202 → 300 — 400 — 500 — 81

803 → 103 → 203 →

80

Tamb - - - - - - - - - - - - - - - Danticip - - - - 82

Tcons - - - - - - - - - - - - - - -

# Fig. 2

Fig. 3

Fig. 4

Fig. 5

Fig. 6

Fig. 7

**EP 3 181 025 B1**

## RÉFÉRENCES CITÉES DANS LA DESCRIPTION

**Documents brevets cités dans la description**

- US 4623969 A